# FASCICULE DE BREVET EUROPEEN

(11) **EP 3 109 406 B1**
(45) Date de publication et mention de la délivrance du brevet: **07.03.2018**
(21) Numéro de dépôt: 16174752.2
(22) Date de dépôt: 16.06.2016
(51) Int. Cl.: F01D 9/04, F01D 25/24

(54) **CARTER DE COMPRESSEUR DE TURBOMACHINE AXIALE**
GEHÄUSE FÜR KOMPRESSOR EINES AXIALEN TURBOTRIEBWERKS
AXIAL TURBOMACHINE COMPRESSOR CASING

(30) Priorité: 26.06.2015 BE 201505394
(43) Date de publication de la demande: 28.12.2016
(73) Titulaire: Safran Aero Boosters SA, 4041 Herstal (BE)
(72) Inventeur: CORTEQUISSE, Jean-François, 3870 Heers (BE)
(74) Mandataire: Lecomte & Partners

(56) Documents cités:
- EP-A1- 2 833 001
- JP-B2- 2 961 076
- US-A1- 2013 000 324

## Description

### Domaine technique

L'invention concerne un stator de turbomachine axiale avec un nombre de fixation réduit. L'invention a également trait à un stator avec des groupes d'aubes de compresseur de turbomachine axiale. L'invention propose également un turbopropulseur ou un turboréacteur d'aéronef.

### Technique antérieure

Un compresseur de turbomachine axiale présente plusieurs rangées d'aubes, tantôt rotoriques, tantôt statoriques. Leur alternance permet de comprimer progressivement le flux entrant tout en assurant un débit élevé. Les rangées d'aubes statoriques sont supportées par un carter externe qui forme en outre un lien mécanique entre le bec de séparation et le carter intermédiaire de la turbomachine. Le carter externe joue un double rôle en matière d'étanchéité puisqu'il évite les recirculations au-dessus des aubes et qu'il reçoit des couches annulaires de matériau abradable pour former des joints annulaires autour des aubes rotoriques.

Le carter permet de supporter chaque aube de manière individuelle, ainsi que de les maintenir dans une orientation et une position prédéterminées pour garantir un rendement optimal. Afin de simplifier la fixation des aubes sur le carter, il est connu de regrouper plusieurs aubes statoriques à l'aide de plateformes communes. Celles-ci sont alors fixées au carter à l'aide d'un nombre réduit de vis.

Le document EP 2 821 595 A1 divulgue un compresseur basse pression de turbomachine axiale. Le compresseur comporte un carter externe composite supportant plusieurs rangées d'aubes statoriques entre lesquelles évoluent des rangées d'aubes rotoriques. Les aubes statoriques sont réunies en secteurs d'aubes dont les plateformes sont liées les unes aux autres de sorte à former un support de fixation commun. La fixation du secteur s'effectue à l'aide de vis prévues sur les supports communs. Cette configuration permet de réduire le nombre d'axes de fixation par rapport au nombre d'aubes, tout en privilégiant la légèreté et la rigidité. Toutefois, le nombre d'axes de fixation demeure élevé.

Le document EP 2 833 001 A1 divulgue un stator de compresseur de turbomachine axiale. Le stator comprend un carter annulaire externe avec une surface annulaire interne ; et plusieurs groupes d'aubes. Chaque groupe d'aubes comporte deux rangées d'aubes statoriques agencées selon la circonférence du carter, lesdites rangées étant décalées axialement. En outre, chaque groupe d'aubes montre une virole externe de fixation des aubes du groupe sur le carter. La virole externe est en regard de la surface interne du carter et forme un ensemble monobloc avec les aubes associées. Toutefois, la rigidité du stator reste limitée.

### Résumé de l'invention

### Problème technique

L'invention a pour objectif de résoudre au moins un des problèmes posés par l'art antérieur. Plus précisément, l'invention a pour objectif de simplifier la fixation des aubes sur un stator de turbomachine axiale. L'invention a également pour objectif de rigidifier un stator de turbomachine axiale.

### Solution technique

L'invention a pour objet un stator de turbomachine axiale, notamment de compresseur de turbomachine axiale, le stator comprenant : un carter annulaire externe avec une surface annulaire interne ; et au moins un groupe d'aubes avec : une rangée d'aubes statoriques agencées selon la circonférence du carter, et une virole externe de fixation des aubes sur le carter, la virole épousant la surface interne du carter ; remarquable en ce qu'au moins un ou chaque groupe d'aubes comprend plusieurs rangées d'aubes statoriques décalées axialement, la virole externe et les rangées d'aubes dudit groupe étant un ensemble monobloc. Au moins une ou chaque virole de groupe d'aubes s'étend axialement sur toute la longeur du carter.

Selon un mode avantageux de l'invention, au moins une ou chaque virole de groupe d'aubes forme préférentiellement une peau étanche sur toute la longueur axiale du carter.

Selon un mode avantageux de l'invention, le carter comprend une paroi annulaire sur laquelle est formée la surface interne ; et au moins une, préférentiellement deux brides annulaires de fixation disposées aux extrémités axiales de la paroi annulaire.

Selon un mode avantageux de l'invention, le carter externe est réalisé en matériau composite, notamment à matrice organique.

Selon un mode avantageux de l'invention, le carter composite comprend une préforme fibreuse, préférentiellement avec un empilement de plis tissés et/ou un matelas tissé de manière tridimensionnelle.

Selon un mode avantageux de l'invention, au moins un ou chaque groupe d'aubes est venu de matière.

Selon un mode avantageux de l'invention, au moins une ou chaque virole externe comprend une surface externe principale avec des cavités externes fermées par le carter.

Selon un mode avantageux de l'invention, au moins un ou chaque groupe d'aubes comprend au moins trois rangées d'aubes statoriques, préférentiellement au moins quatre rangées d'aubes statoriques distantes axialement les unes des autres, préférentiellement réparties axialement le long du carter.

Selon un mode avantageux de l'invention, au moins une ou chaque virole externe comprend des portions de fixation telles des axes de fixation, éventuellement filetés, les portions s'étendant préférentiellement radialement.

Selon un mode avantageux de l'invention, au moins une ou chaque portion de fixation comprend des branches déformées plastiquement de manière à fixer la virole correspondante au carter par engagement de matière.

Selon un mode avantageux de l'invention, le stator comprend un espace annulaire séparant deux rangées d'aubes consécutives d'un même groupe d'aube, l'espace étant apte à recevoir une rangée annulaire d' aubes rotoriques de la turbomachine.

Selon un mode avantageux de l'invention, le stator comprend plusieurs groupes d'aubes, et des aubes avec des plateformes de fixation liées au carter, les plateformes d'aubes étant disposées entre des groupes d' aubes, préférentiellement selon la direction circonférentielle.

Selon un mode avantageux de l'invention, au moins un ou chaque groupe comprend des viroles internes solidaires des extrémités internes des aubes dudit groupe.

Selon un mode avantageux de l'invention, le stator comprend plusieurs groupes d'aubes et au moins un ou plusieurs segments angulaires de viroles internes disposées entre les groupes d'aubes, éventuellement les segments de viroles internes sont reliés aux extrémités internes desdites aubes ou aux viroles internes des groupes.

Selon un mode avantageux de l'invention, au moins un ou chaque groupe comprend une ou plusieurs zones annulaires de réception de joints, notamment de couches de matériau abradables, destinés assurer des étanchéités avec des rangées d'aubes rotoriques ; lesdites zones comprenant éventuellement une surface de rugosités Ra supérieure à 10 µm, et/ou un treillis.

Selon un mode avantageux de l'invention, les aubes statoriques d'au moins un ou de chaque rangée d'aubes d'au moins un ou chaque groupe sont agencées selon la circonférence du carter.

Selon un mode avantageux de l'invention, le carter externe comprend une surface interne principale, au moins une ou chaque virole externe comprend une surface externe principale en contact de la surface interne principale, éventuellement épousant la surface interne principale, préférentiellement plaquée contre la surface interne principale. L'aspect principal peut être lié à la superficie.

Selon un mode avantageux de l'invention, le carter comprend des ouvertures traversées par les portions de fixation des viroles externes.

Selon un mode avantageux de l'invention, au moins deux rangées consécutives d'aubes d'un même groupes sont écartés d'une distance supérieure ou égale à la longueur axiale de l'une desdites rangées d'aubes.

Selon un mode avantageux de l'invention, le stator comprend plusieurs groupes d'aubes dont les viroles externes recouvrent toute la surface interne du carter.

Selon un mode avantageux de l'invention, au moins un ou chaque groupe comprend une virole externe en forme de quadrilatère avec des coins, ledit groupe comprenant une portion de fixation à chaque coin du quadrilatère, préférentiellement les portions de fixation de chaque groupes sont réunis aux coins.

Selon un mode avantageux de l'invention, au moins un ou chaque groupe comprend au moins dix fois plus, préférentiellement au moins quinze fois plus, plus préférentiellement au moins vingt fois plus d'aubes statoriques que de portions de fixation.

L'invention a également pour objet un compresseur de flux primaire de turbomachine axiale, le compresseur comprenant un stator muni d'un carter annulaire externe avec une surface annulaire interne ; et au moins un groupe d'aubes avec : une rangée d'aubes statoriques agencées selon la circonférence du carter, et une virole externe de fixation des aubes sur le carter, la virole épousant la surface interne du carter et étant en contact du flux primaire, préférentiellement guidant axialement le flux primaire; remarquable en ce qu'au moins un ou chaque groupe d'aubes comprend plusieurs rangées d'aubes statoriques décalées axialement, la virole externe et les rangées d'aubes dudit groupe étant un ensemble monobloc.

L'invention a également pour objet une turbomachine comprenant un stator, remarquable en ce que le stator est conforme à l'invention, préférentiellement la turbomachine comprend un compresseur basse pression, le stator étant le stator dudit compresseur basse pression.

Selon un mode avantageux de l'invention, la turbomachine comprend un rotor monobloc, le carter comprenant deux demi-coquilles réunies autour dudit rotor monobloc.

De manière générale, les modes avantageux de chaque objet de l'invention sont également applicables aux autres objets de l'invention. Dans la mesure du possible, chaque objet de l'invention est combinable aux autres objets.

### Avantages apportés

Les aubes sont réunies en quartiers d'orange formant le carter du compresseur. L'invention permet de réduire considérablement les ressources nécessaires pour fixer les aubes statoriques. En effet, chaque axe de fixation contribue à la fixation de plusieurs rangées d'aubes statoriques. Par ce biais, le nombre d'orifices de fixation à prévoir dans le carter sont réduits. Cela préserve la résistance mécanique du carter, et limite les risques de fuites.

L'invention permet également de former une barrière étanche tout le long du carter. Elle forme une doublure avec une continuité de matière empêchant les recirculations contournant les plateformes d'aubes en longeant la surface interne du carter.

### Brève description des dessins

La figure 1 représente une turbomachine axiale selon l'invention.
La figure 2 est un schéma d'un compresseur de turbomachine selon l'invention.
La figure 3 illustre une coupe axiale d'un groupe d'aubes selon l'invention.
La figure 4 esquisse une vue en plan d'un groupe d'aubes selon l'invention.
La figure 5 est une coupe du stator suivant l'axe 5-6 tracé sur la figure 2 selon un premier mode de réalisation de l'invention.
La figure 6 est une coupe du stator suivant l'axe 5-6 tracé sur la figure 2 selon un deuxième mode de réalisation de l'invention.

### Description des modes de réalisation

Dans la description qui va suivre, les termes intérieur ou interne et extérieur ou externe renvoient à un positionnement par rapport à l'axe de rotation d'une turbomachine axiale. La direction axiale correspond à la direction le long de l'axe de rotation de la turbomachine. L'amont et l'aval font référence au sens d'écoulement principal du flux dans la turbomachine.

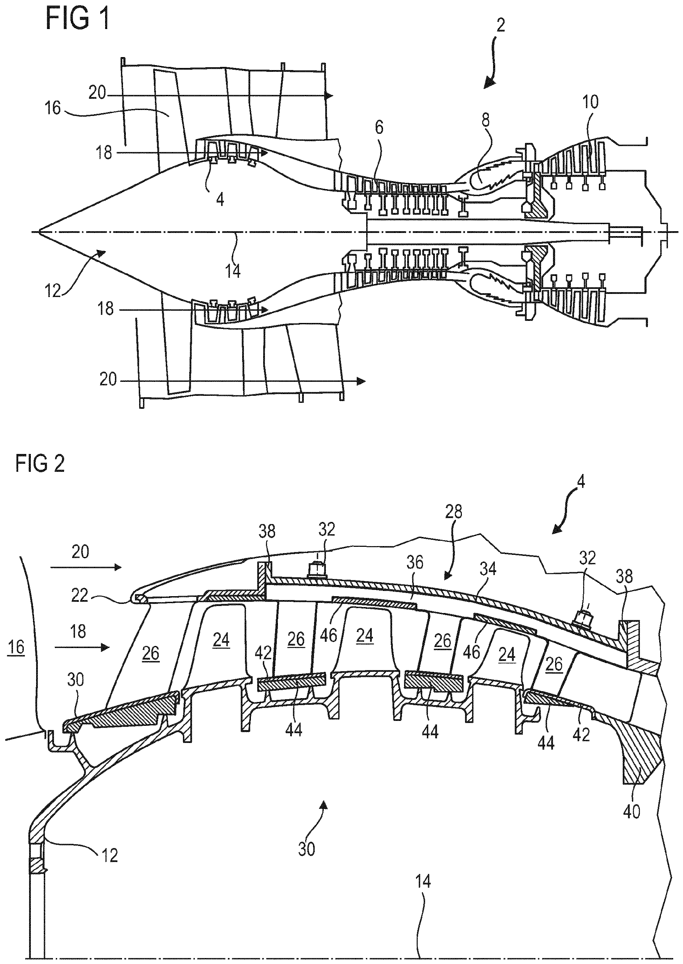

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8. Des moyens de démultiplication peuvent augmenter la vitesse de rotation transmise aux compresseurs.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Le flux secondaire peut être accéléré de sorte à générer une réaction de poussée. Les flux primaire 18 et secondaire 20 sont des flux annulaires, ils sont canalisés par le carter de la turbomachine. A cet effet, le carter présente des parois cylindriques ou viroles qui peuvent être internes et externes.

La figure 2 est une vue en coupe d'un compresseur d'une turbomachine axiale telle que celle de la figure 1. Le compresseur peut être un compresseur basse-pression 4. On peut y observer une partie du fan 16 et le bec de séparation 22 du flux primaire 18 et du flux secondaire 20. Le rotor 12 comprend plusieurs rangées d'aubes rotoriques 24, en l'occurrence trois. Au moins une ou chaque rangée d'aubes rotoriques 24 peut former un ensemble monobloc avec un disque ou un tambour du rotor 12.

Le compresseur basse pression 4 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression statique. Les redresseurs sont fixés sur un carter externe 28 formés par plusieurs groupes d'aubes 30 répartis autour de l'axe de rotation 14 de la turbomachine.

Les groupes d'aubes 30 peuvent chacun présenter des portions de fixation 32 au carter 28. Elles s'étendent axialement sur toute la longueur axiale du carter. Il peut s'agir d'axes de fixation 32, tels des vis ou des lockbolts. Ou encore, ces portions de fixation 32 peuvent comprendre des éléments déformés ou déformables pour assurer un blocage par engagement de matière. Elles peuvent être de type attaches parisiennes, c'est-à-dire avec deux languettes repliées contre la surface externe du carter. En complément ou en alternative, les groupes d'aubes peuvent être collés au carter.

Le carter 28 présente une paroi annulaire 34 avec une surface interne recevant chaque surface externe de virole externe 36 de groupe d'aubes 30. La paroi 34 est délimitée axialement par des brides annulaires externes 38. Celles-ci peuvent servir à fixer le carter 28 du compresseur au carter intermédiaire 40 de la turbomachine, et à supporter le bec de séparation 22 en entrée du compresseur 4.

Le stator peut former une structure composite à plus d'un titre. Le carter 30 et en particulier sa paroi 34 peuvent être réalisés en matériau composite à matrice organique renforcée par une préforme fibreuse. Cette préforme peut présenter un empilement de plis fibreux tissés en carbone. En complément, la virole externe 36 du groupe peut être en métal, tel du titane, de l'aluminum ou leur alliage. Rassembler un métal à un matériau organique permet de bénéficier de la résistance mécanique, chimique, thermique du premier, et de profiter de la légerté du deuxième.

Le compresseur 4 peut présenter plusieurs viroles internes 42 qui sont reliées au extrémitées internes des aubes statoriques 26. Ces viroles 42 forment des joints d'étanchéité qui coopèrent avec des jeux de léchettes, ou nervures annulaires externes, du rotor 12. Les viroles 42 peuvent comprendre des couches annulaires de matériau abradable 44 pour coopérer par abrasions avec ces léchettes, afin d'assurer une étanchétité dynamiques. Les viroles peuvent être formées des segments angulaires de viroles interne. Chaque segment est solidaire d'un groupe d'aubes 30, chaque groupe 30 peut donc comporter plusieurs segments de virole interne répartis axialement le long dudit groupe 30.

Encore dans l'optique d'assurer une étanchéité, le compresseur peut présenter des joints 46 autour des rangées annulaires d'aubes rotoriques 24. Ces joints 46 peuvent être formés sur chaque groupe d'aubes 40, en plusieurs bandes annulaires séparées axialement par les rangées d'aubes statoriques. Ces joints 46 peuvent être des couches de matériau abradable 46.

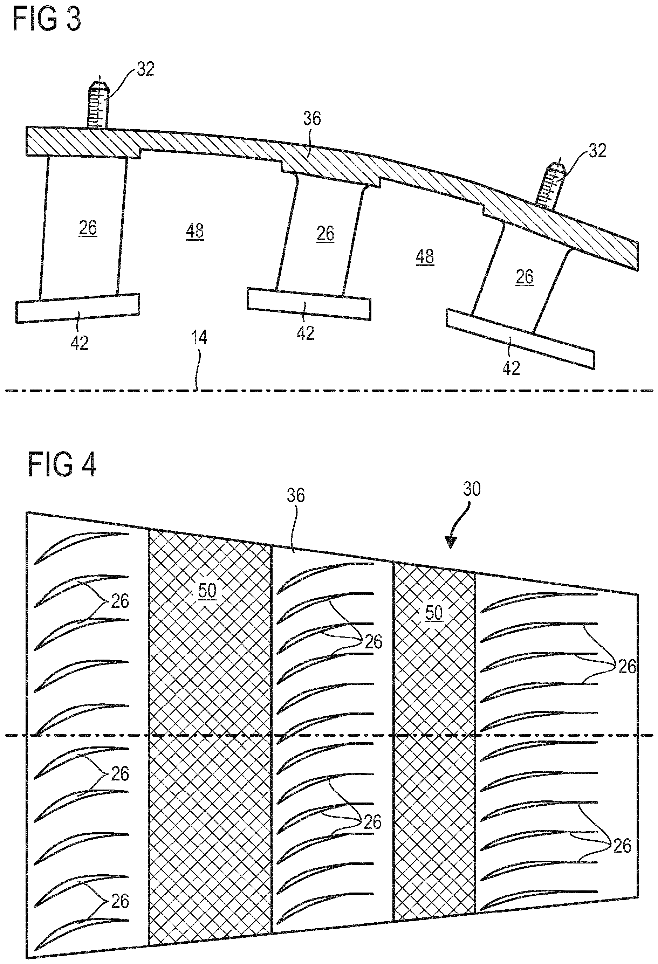

La figure 3 illustre un groupe d'aubes 30 vu de profil. Le groupe 30 comprend trois rangées d'aubes 26. Bien qu'une seule aube par rangée ne soit visible, chaque rangée peut comprendre plusieurs aubes. De même, un groupe peut comporter deux, quatre ou davantage de rangées d'aubes 26.

Les aubes statoriques 26 s'étendent essentiellement radialement depuis la virole externe 36. La virole externe 36, les portions de fixation 32 et les aubes 23, préférentiellement chaque aube 26 et chaque portion de fixation 32 du groupe 32 forment un ensemble monobloc, préférentiellement venu de matière.

Le groupe 30 présente des passages annulaires 48 tels des espaces annulaires 48 destinés à recevoir une rangée annulaire d'aubes rotoriques. Ces espaces 48 permettent d'encadrer une rangée rotorique entre deux rangées d'aubes statoriques 26 successives. Leur longueur axiale est supérieure à la majorité de la longueur axiale d'une rangée d'aubes statoriques 26, préférentiellement supérieure ou égale à ladite longueur. Les espaces 48 peuvent également délimiter et/ou séparer axialement les viroles internes 42.

La figure 4 esquisse un vue en plan d'un groupe d'aubes 30 observé depuis l'intérieur. Les optionnelles viroles internes ne sont pas représentées par soucis de clarté. Le nombre d'aubes 26 par rangée est figuratif. Chaque rangée peut comprendre au moins deux aubes 26, préférentiellement au moins dix aubes 26, éventuellement au moins trente aubes 26.

Les aubes 26 peuvent former un quadrillage. En raison de la diminution de diamètre de la veine primaire qui traverse le compresseur, la virole externe 36 se rétrécit vers l'aval. La virole externe 36 présente des zones de réception 50 de joints. Ces zones 50 peuvent être des arcs de cercles et disposées entre les rangées d'aubes 26. Leur surface interne peuvent être essentiellement rugueuses, de rugosité Ra supérieure ou égale à 10 µm, préférentiellement supérieure ou égale à 50µm. Les zones 50 peuvent être recouvertes de treillis d'ancrage.

Les aubes statoriques 26 de chaque rangée sont régulièrement espacées les unes des autres, et présentent une même orientation angulaire dans le flux. Elles sont immobiles les unes par rapport aux autres. Avantageusement, les aubes d'une même rangée sont identiques. Eventuellement, l'espacement entre les aubes peut varier localement tout comme leur orientation angulaire. Certaines aubes peuvent être différentes du reste des aubes de leur rangée.

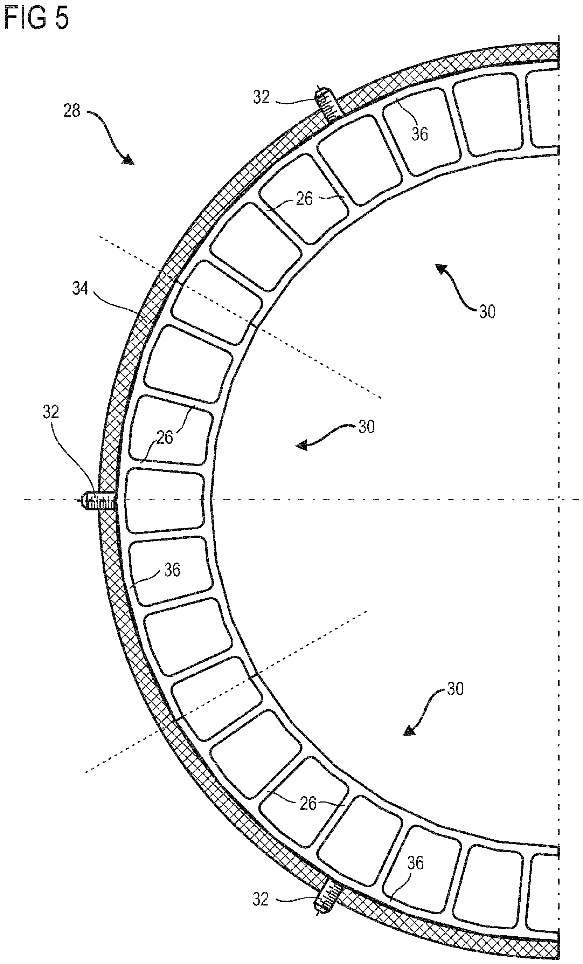

La figure 5 représente une coupe du stator du compresseur selon un premier mode de réalisation de l'invention. La coupe est réalisée suivant l'axe 5-6 tracé sur la figure 2. Seule une moitié du stator est représentée. Les portions de fixation 32 traversent la paroi 34 du carter 28 au niveau d'orifices de fixation.

Le compresseur comporte un carter 28 formé de demi-coquilles réunies à l'aide de brides axiales s'étendant radialement. Il présente en outre plusieurs groupes d'aubes 30 dont la combinaison décrit un cercle fermé. Ici, la demi-coquille supporte trois groupes d'aubes 30, six groupes répartis autour de l'axe de rotation 14 peuvent former une boucle fermée. Toutefois, le tour du carter peut être bouclé par quatre, huit, ou tout autre nombre de groupes. Les viroles externes 36 recouvrent tout le tour de la surface interne du carter 28.

Les groupes 30 présentent des segments de viroles internes 42. Ceux-ci peuvent être monobloc avec leur groupe respectif, préférentiellement venus de matière avec les aubes et la virole externe du groupe associé. Ils reçoivent les joints annulaires assurant des étanchéités avec les léchettes du rotor. Ces joints peuvent être appliqués sur le groupe 30 avant ou après leur montage sur le carter. La réunion des segments de viroles internes forme au moins un cercle, préférentiellement plusieurs cercles. Un groupe d'aubes 30 peut être réalisé par fabrication additive ; par exemple à base de poudre. Il est envisageable de réaliser un groupe par fonderie par cire perdue.

Suivant une alternative, les segments de viroles internes sont rapportés aux extrémités internes des aubes des groupes.

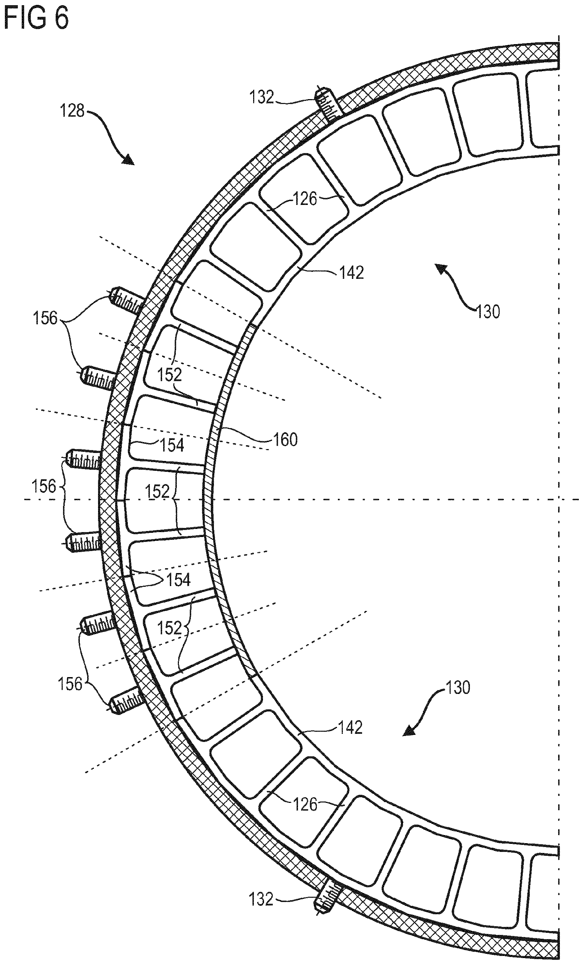

La figure 6 représente une coupe du stator du compresseur selon un deuxième mode de réalisation de l'invention. La coupe est réalisée suivant l'axe 5-6 tracé sur la figure 2. Cette figure 6 reprend la numérotation des figures précédentes pour les éléments identiques ou similaires, la numération étant toutefois incrémentée de 100. Des numéros spécifiques sont utilisés pour les éléments spécifiques à ce mode de réalisation.

Le compresseur présente une configuration mixte en ce sens qu'il présente à la fois des groupes d'aubes 140 fixées en groupe au carter 128, et des aubes 152 fixées de manière individuelles. Les aubes séparées 152 peuvent chacune comprendre des plateformes individuelles 154 avec des axes de fixation 156. Suivant une option, les ou certaines aubes séparées 152 peuvent être réunies en rangées de sous-groupes d'aubes. Ces sous-groupes peuvent contenir une unique rangée d'aubes. Les pales, c'est-à-dire les parties radiales traversant le flux primaire, des aubes séparées 152 peuvent être similaire aux aubes 126 de groupes 130.

Des segments de viroles internes rapportées 160 peuvent être liés aux extrémités internes des aubes séparées 152 en dehors des groupes d'aubes 130. Ces viroles internes rapportées 160 peuvent être liées aux viroles internes 142 des groupes 130. Un tel montage composite augmente la rigidité de l'ensemble grâce aux groupes 130 qui peuvent être métalliques et de la légèreté en y intercalant des segments de viroles internes rapportées 160 en matériau composite.

La description qui précède est détaillée en relation à un carter. Toutefois, les groupes d'aubes peuvent être adaptés à toute partie d'une turbomachine, dont une turbine. Les formes des aubes peuvent être repensées, l'emploi de métaux type inconel ou de matériaux céramiques sont envisageables.

## Revendications

1. Stator de turbomachine axiale, notamment de compresseur (4; 6) de turbomachine axiale (2), le stator comprenant :
- un carter annulaire externe (28 ; 128) avec une surface annulaire interne ; et
- au moins un groupe d'aubes (30 ; 130) avec :
o une rangée d'aubes statoriques (26; 126) agencées selon la circonférence du carter (28 ; 128), et
o une virole externe (36) de fixation des aubes (26 ; 126) sur le carter (28 ; 128), la virole (36) épousant la surface interne du carter (28 ; 128);
au moins un ou chaque groupe d'aubes (30; 130) comprend plusieurs rangées d'aubes statoriques (26 ; 126) décalées axialement,
la virole externe (36) et les rangées d'aubes (26 ; 126) dudit groupe (30 ; 130) étant un ensemble monobloc,
**caractérisé en ce qu'**au moins une ou chaque virole (36) de groupe d'aubes (30 ; 130) s'étend axialement sur toute la longueur du carter (28 ; 128).

2. Stator selon la revendication 1, **caractérisé en ce qu'**au moins une ou chaque virole (36) de groupe d'aubes (30 ; 130) forme une peau étanche sur toute la longueur axiale du carter (28 ; 128).

3. Stator selon l'une des revendications 1 à 2, **caractérisé en ce que** le carter (28 ; 128) comprend une paroi annulaire (34) sur laquelle est formée la surface interne ; et au moins une, préférentiellement deux brides annulaires de fixation (38) disposées aux extrémités axiales de la paroi annulaire (34).

4. Stator selon l'une des revendications 1 à 3, **caractérisé en ce que** le carter externe (28 ; 128) est réalisé en matériau composite, notamment à matrice organique.

5. Stator selon la revendication 4, **caractérisé en ce que** le carter (28 ; 128) composite comprend une préforme fibreuse, préférentiellement avec un empilement de plis tissés et/ou un matelas tissé de manière tridimensionnelle.

6. Stator selon l'une des revendications 1 à 5, **caractérisé en ce qu'**au moins une ou chaque virole externe (36) comprend une surface externe principale avec des cavités externes fermées par le carter (28 ; 128).

7. Stator selon l'une des revendications 1 à 6, **caractérisé en ce qu'**au moins un ou chaque groupe d'aubes (30; 130) comprend au moins trois rangées d'aubes statoriques (26; 126), préférentiellement au moins quatre rangées d'aubes statoriques (26; 126) distantes axialement les unes des autres, préférentiellement réparties axialement le long du carter (28 ; 128).

8. Stator selon l'une des revendications 1 à 7, **caractérisé en ce qu'**au moins une ou chaque virole externe (36) comprend des portions de fixation (32 ; 132) telles des axes de fixation (32 ; 132), éventuellement filetés, les portions (32 ; 132) s'étendant préférentiellement radialement.

9. Stator selon la revendication 8, **caractérisé en ce qu'**au moins une ou chaque portion de fixation (32 ; 132) comprend des branches déformées plastiquement de manière à fixer la virole (36) correspondante au carter (28 ; 128) par engagement de matière.

10. Stator selon l'une des revendications 1 à 9, **caractérisé en ce qu'**il comprend un espace annulaire (48) séparant deux rangées d'aubes (26; 126) consécutives d'un même groupe d'aubes (30 ; 130), l'espace (48) étant apte à recevoir une rangée annulaire d'aubes rotoriques (24) de la turbomachine (2).

11. Stator selon l'une des revendications 1 à 10, **caractérisé en ce qu'**il comprend plusieurs groupes d'aubes (30 ; 130), et des aubes (152) avec des plateformes de fixation (154) liées au carter (28 ; 128), les plateformes (154) d'aubes (152) étant disposées entre des groupes d'aubes (26 ; 126), préférentiellement selon la direction circonférentielle.

12. Stator selon l'une des revendications 1 à 11, **caractérisé en ce qu'**il comprend plusieurs groupes d'aubes (30 ; 130) et au moins un ou plusieurs segments angulaires de viroles internes (42 ; 142) disposées entre les groupes d'aubes (30 ; 130), éventuellement les segments de viroles internes (42 ; 142) sont reliées aux extrémités internes des aubes (26 ; 126 ; 152) ou au viroles internes (142) des groupes (30 ; 130).

13. Stator selon l'une des revendications 1 à 12, **caractérisé en ce qu'**au moins un ou chaque groupe (30 ; 130) comprend une ou plusieurs zones annulaires (50) de réception de joints (46), notamment de couches de matériau abradables, destinés assurer des étanchéités avec des rangées d'aubes rotoriques (24); lesdites zones (50) comprenant éventuellement une surface de rugosités Ra supérieure à 10 µm, et/ou un treillis.

14. Turbomachine (2) comprenant un stator, **caractérisée en ce que** le stator est conforme à l'une des revendications 1 à 13, préférentiellement la turbomachine (2) comprend un compresseur basse pression (4), le stator étant le stator dudit compresseur basse pression (4).

15. Turbomachine (2) selon la revendication 14, **caractérisée en ce qu'**elle comprend un rotor monobloc (12), le carter (28 ; 128) comprenant deux demi-coquilles réunies autour dudit rotor monobloc (12).

## Patentansprüche

1. Stator einer axialen Turbomaschine, insbesondere eines Kompressors (4; 6) einer axialen Turbomaschine (2), umfassend:
- ein ringförmiges äußeres Gehäuse (28; 128) mit einer ringförmigen Innenfläche; und
- mindestens eine Gruppe von Schaufeln (30; 130) mit:
o einer Reihe von Statorschaufeln (26; 126) angeordnet entlang des Gehäuseumfangs (28; 128) und
o einem äußeren Ring (36) zur Befestigung der Schaufeln (26; 126) am Gehäuse (28; 128), wobei der Ring (36) eng an der Innenfläche des Gehäuses (28; 128) liegt,
mindestens eine oder jede Gruppe der Schaufeln (30; 130) umfasst mehrere axial versetzte Reihen von Statorschaufeln (26; 126), der äußere Ring (36) und die Reihen von Schaufeln (26; 126) dieser Gruppe (30; 130) bilden ein einstückiges Ganzes, **dadurch gekennzeichnet, dass** mindestens ein oder jeder Ring (36) der Gruppe der Schaufeln (30; 130) sich axial über die gesamte Länge des Gehäuses erstreckt (28; 128).

2. Der Stator gemäß Anspruch 1, **dadurch gekennzeichnet, dass** mindestens ein oder jeder Ring (36) der Gruppe der Schaufeln (30; 130) eine wasserdichte Schicht über die gesamte axiale Länge des Gehäuses bildet (28; 128).

3. Der Stator gemäß einem der Ansprüche 1 bis 2, **dadurch gekennzeichnet, dass** das Gehäuse (28; 128) eine ringförmige Wand (34) umfasst, auf der die Innenfläche ausgebildet ist; und mindestens eine, vorzugsweise zwei ringförmige Befestigungsflansche (38), die an den Axenenden der Ringwand angeordnet sind (34).

4. Der Stator gemäß einem der Ansprüche 1 bis 3, **dadurch gekennzeichnet, dass** das äußere Gehäuse (28; 128) aus Verbundwerkstoff besteht, insbesondere mit einer organischen Matrix.

5. Der Stator gemäß Anspruch 4, **dadurch gekennzeichnet, dass** das Verbundwerkstoffgehäuse (28; 128) einen faserigen Vorformling beinhaltet, vorzugweise mit einer Aufschichtung von gewebten Schichten und/oder einer dreidimensionalen Gewebematratze.

6. Der Stator gemäß einem der Ansprüche 1 bis 5, **dadurch gekennzeichnet, dass** mindestens ein oder jeder äußere Ring (36) eine äußere Hauptfläche mit äußeren Ausnehmungen, die durch das Gehäuse (28; 128) verschlossen werden, umfasst.

7. Der Stator gemäß einem der Ansprüche 1 bis 6, **dadurch gekennzeichnet, dass** mindestens eine oder jede Gruppe der Schaufeln (30; 130) mindestens drei Reihen der Statorschaufeln umfasst (26; 126), vorzugsweise mindestens vier axial voneinander entfernte Reihen der Statorschaufeln (26; 126), vorzugsweise axial verteilt entlang des Gehäuses (28; 128).

8. Der Stator gemäß einem der Ansprüche 1 bis 7, **dadurch gekennzeichnet, dass** mindestens einer oder jeder äußere Ring (36) Befestigungsabschnitte (32; 132) wie Befestigungsachsen (32; 132) beinhaltet, gegebenenfalls Gewinde und Abschnitte (32; 132), die sich vorzugsweise radial erstrecken.

9. Der Stator gemäß Anspruch 8, **dadurch gekennzeichnet, dass** mindestens ein oder jeder Befestigungsabschnitt (32; 132) plastisch verformte Bereiche umfasst, um den Ring (36) am korrespondierenden Gehäuse (28; 128) durch Materialeinsatz zu befestigen.

10. Der Stator gemäß einem der Ansprüche 1 bis 9, **dadurch gekennzeichnet, dass** er einen Ringspalt (48) umfasst, der zwei Reihen von Schaufeln trennt (26; 126), die auf eine gleiche Gruppe von Schaufeln folgen (30; 130), wobei der Spalt (48) für das Aufnehmen einer Ringreihe von Rotorschaufeln (24) der Turbomaschine (2) geeignet ist.

11. Der Stator gemäß einem der Ansprüche 1 bis 10, **dadurch gekennzeichnet, dass** er mehrere Gruppen von Schaufeln umfasst (30; 130) sowie Schaufeln (152) mit Befestigungsplattformen (154), die mit dem Gehäuse (28; 128) verbunden sind, die Plattformen (154) der Schaufeln (152) zwischen den Gruppen der Schaufeln (26; 126) angeordnet sind, vorzugsweise in Umfangsrichtung.

12. Der Stator gemäß einem der Ansprüche 1 bis 11, **dadurch gekennzeichnet, dass** er mehrere Gruppen von Schaufeln (30; 130) umfasst und mindestens ein oder mehrere Winkelsegmente der inneren Ringe (42; 142), die zwischen den Gruppen der Schaufeln (30; 130) angeordnet sind, eventuell die Segmente der Innenringe (42; 142) mit den inneren Enden der Schaufeln (26; 126; 152) oder den inneren Ringen (142) der Gruppen (30; 130) verbunden sind.

13. Der Stator gemäß einem der Ansprüche 1 bis 12, **dadurch gekennzeichnet, dass** mindestens eine oder jede Gruppe (30; 130) eine oder mehrere ringförmige Zonen (50), welche Dichtungen erhalten (46), umfasst, insbesondere Schichten von Verschleißmaterial, welches für die Gewährleistung der Dichtungen mit Reihen von Rotorschaufeln (24) geeignet ist; die genannten Zonen (50) beinhalten eventuell Oberflächenrauigkeiten Ra höher als 10 und/oder ein Gitter.

14. Turbomaschine (2) umfassend einen Stator, **dadurch gekennzeichnet, dass** der Stator gemäß einem der Ansprüche 1 bis 13 ist, vorzugsweise enthält die Turbomaschine (2) einen Niederdruckkompressor (4), wobei der Stator den Stator des Niederdruckkompressors (4) bildet.

15. Die Turbomaschine (2) gemäß Anspruch 14, **dadurch gekennzeichnet, dass** sie einen einteiligen Rotor (12) enthält, das Gehäuse (28; 128) enthält zwei Halbschalen, die mit dem einteiligen Rotor (12) verbunden sind.

## Claims

1. An axial turbomachine stator, notably an axial turbomachine (2) compressor (4; 6), the stator comprising:
- an outer annular casing (28; 128) with an inner annular surface; and
- at least one group of blades (30; 130) with:
o a row of stator blades (26; 126) arranged along the circumference of the casing (28; 128), and
o an outer shroud (36) for attaching blades (26; 126) to the casing (28; 128), the shroud (36) matching the inner surface of the casing (28; 128);
at least one or each group of blades (30; 130) comprises a plurality of rows of axially offset stator blades (26; 126),
the outer ring (36) and the rows of blades (26; 126) of said group (30; 130) being a one-piece assembly,
**characterized in that** at least one or each shroud (36) of group of blades (30; 130) extends axially over the entire length of the casing (28; 128).

2. The stator according to Claim 1, **characterized in that** at least one or each shroud (36) of group of blades (30; 130) forms a hermetic skin over the entire axial length of the casing (28; 128).

3. The stator according to any one of Claims 1 to 2, **characterized in that** the casing (28; 128) comprises an annular wall (34) on which the inner surface is formed; and at least one, preferably two annular mounting flanges (38) arranged at the axial ends of the annular wall (34).

4. The stator according to any one of Claims 1 to 3, **characterized in that** the outer casing (28; 128) is made of composite material, notably with an organic matrix.

5. The stator according to Claim 4, **characterized in that** the composite casing (28; 128) comprises a fibre preform, preferably with a stack of woven plies and/or a woven three-dimensional mattress.

6. The stator according to any one of Claims 1 to 5, **characterized in that** at least one or each outer shroud (36) comprises a main outer surface with external cavities closed by the casing (28; 128).

7. The stator according to any one of Claims 1 to 6, **characterized in that** at least one or each group of blades (30; 130) comprises at least three rows of stator blades (26; 126), preferably at least four rows of stator blades (26; 126) spaced axially from one another, preferably distributed axially along the casing (28; 128).

8. The stator according to any one of Claims 1 to 7, **characterized in that** at least one or each outer shroud (36) comprises attachment portions (32; 132) such as attachment pins (32; 132), possibly threaded, the portions (32; 132) preferably extending radially.

9. The stator according to Claim 8, **characterized in that** at least one or each attachment portion (32; 132) comprises plastically deformed branches so as to integrally secure the corresponding shroud (36) to the casing (28; 128).

10. The stator according to any one of Claims 1 to 9, **characterized in that** it comprises an annular space (48) separating two consecutive rows of blades (26; 126) of the same group of blades (30; 130), the space (48) being adapted to receive an annular row of rotor blades (24) of the turbomachine (2).

11. The stator according to any one of Claims 1 to 10, **characterized in that** it comprises several groups of blades (30; 130), and blades (152) with attachment platforms (154) connected to the casing (28; 128), the platforms (154) of blades (152) being arranged between groups of blades (26; 126), preferably in the circumferential direction.

12. The stator according to any one of Claims 1 to 11, **characterized in that** it comprises several groups of blades (30; 130) and at least one or more angular segments of inner shrouds (42; 142) arranged between the groups of blades (30; 130), the inner shroud segments (42; 142) are possibly connected to the inner ends of the blades (26; 126; 152) or to the inner shrouds (142) of the groups (30; 130).

13. The stator according to any one of Claims 1 to 12, **characterized in that** at least one or each group (30; 130) comprises one or more annular zones (50) for receiving seals (46), notably abradable material layers, intended to ensure sealing with the rows of rotor blades (24); said zones (50) possibly comprising a surface with a roughness Ra greater than 10 µm, and/or a mesh.

14. A turbomachine (2) comprising a stator, **characterized in that** the stator is according to any one of Claims 1 to 13, preferably the turbomachine (2) comprises a low-pressure compressor (4), the stator being the stator of said low-pressure compressor (4).

15. The turbomachine (2) according to Claim 14, **characterized in that** it comprises a one-piece rotor (12), the casing (28; 128) comprising two half-shells united together around said one-piece rotor (12).
